# EUROPEAN PATENT SPECIFICATION

(11) **EP 3 517 360 B1**
(45) Date of publication and mention of the grant of the patent: **06.01.2021**
(21) Application number: 19154198.6
(22) Date of filing: 29.01.2019
(51) Int. Cl.: B60P 1/00, B60R 3/00, B62D 33/03

(54) **SIDE STRUCTURE OF A CARGO SPACE**
SEITENSTRUKTUR EINES FRACHTRAUMS
STRUCTURE LATÉRALE D'UN ESPACE DE CHARGEMENT

(30) Priority: 29.01.2018 FI 20185077
(43) Date of publication of application: 31.07.2019
(73) Proprietor: Sora ja Betoni, V. Suutarinen Oy, 52700 Mäntyharju (FI)
(72) Inventor: SUUTARINEN, Juho, 52700 MÄNTYHARJU (FI)
(74) Representative: Kespat Oy

(56) References cited:
- WO-A1-2010/106380
- DE-A1- 2 801 973
- GB-A- 433 341
- JP-A- 2009 051 421
- US-A- 4 350 382

## Description

The invention relates to a side structure of a cargo space, which includes a vertical structure attached to the cargo space in order to protect the cargo, which vertical structure is fitted pivotably to the cargo space in order to form an access platform.

At its simplest the cargo space of a vehicle is formed by a platform. In order to protect the goods being transported, i.e. the cargo, a side structure is attached to the cargo space, in addition to which a roof too can be used. The side structure can be fixed, or alternatively be openable in order to permit side loading.

Special constructions of the cargo space are deep-loader trailers and inloader trailers, which permit the transportation of high products, such as concrete building elements. Generally in these trailers there is at most only a half-height side structure, the upper part being open. Closed inloader trailers are also manufactured. The side structure protects the goods being transported but hinders, for example, load securing. European patent application number 2716496 discloses a closed inloader trailer. Japanese patent application publication 2009051421 discloses a side structure according to the preamble of the Claim 1.

The invention is intended to create a new type of side structure of a cargo space, which protects the goods being transported, but permits unobstructed working on the cargo space. The characteristics of the side structure according to the present invention are stated in the accompanying Claims. The side structure according to the invention can be moved, for example, during load securing. In addition, using a new and surprising construction a structure facilitating movement and ensuring work safety can be created.

In the following, the invention is described in detail with reference to the accompanying drawings showing some embodiments of the invention, in which
- Figure 1a: shows a side view of the side structure according to the invention fitted to an inloader trailer,
- Figure 1b: shows a rear view of the inloader trailer of Figure 1a,
- Figure 2: shows the side structure according to the invention when being pivoted,
- Figure 3a: shows a schematic diagram of the side structure according to the invention in the transportation position,
- Figure 3b: shows the side structure of Figure 3a in the operating position.

In general, the said side structure of a cargo space 21 includes a vertical structure 10 attached to a cargo space 21 in order to protect the cargo. The vertical structure 10 is arranged pivotably to form an access platform 11 to the cargo space 21. It is then possible to move about on the side of the cargo space without separate platforms. At the same time one can easily reach on top of even a high load.

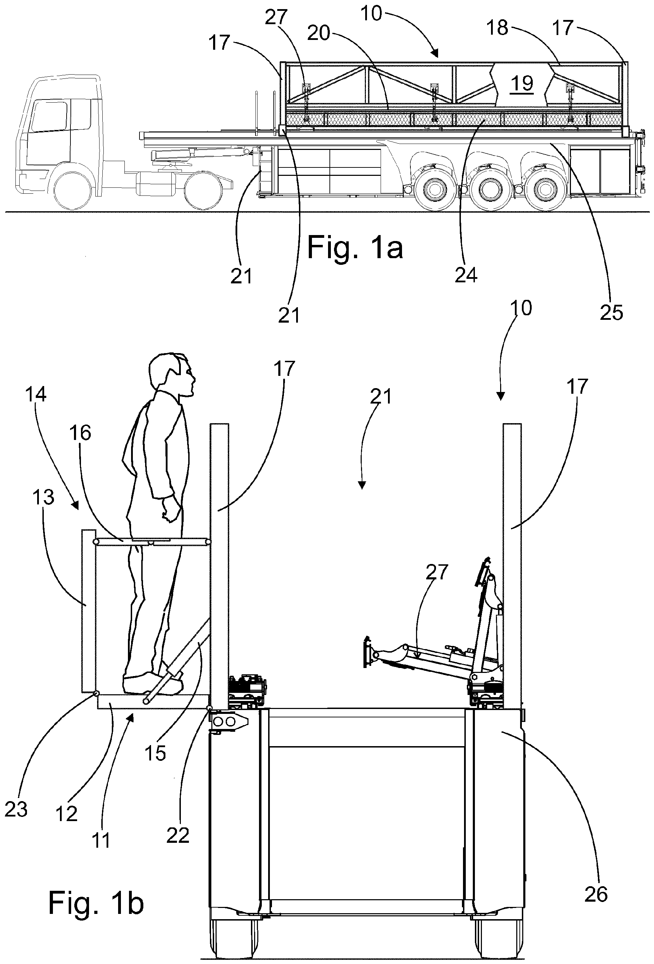

The entire vertical structure can be arranged to pivot, out then an unnecessarily wide access platform will be formed. In addition, the pivoting of a high vertical structure may be prevented in cramped warehouses or building sites. In other words, the pivoting of a high vertical structure to a horizontal level would require much space laterally. According to the invention, the vertical structure 10 includes two part 12 and 13 on top of each other, of which the first part 12 is pivoted to the cargo space 21 and the second part 13 is pivoted to the first part 12. The pivot between the cargo space 21 and the first part 12 is 22. Correspondingly, the pivot between the first part 12 and the second part 13 is 23. More specifically, the first part 12 is arranged to form the access platform 11, the second part 13 being a guard fence 14. At the side of the cargo space an access platform is then formed, at the outer side of which there is in addition a guard fence. In the embodiment shown, the lower part of the vertical structure is at a height of more than a metre, when the guard fence will effectively prevent falling from the access platform, thus considerably increasing work safety. In Figure 1b, the right-hand vertical structure is in the transportation position, the left-hand vertical structure being in the operating position. In the transportation position, the vertical structure protects the cargo when the cargo space is moving. Correspondingly, in the operating position one can safely move on the access platform, for example when securing the cargo or when otherwise checking it. A two-part vertical structure is preferably fitted to both sides of the cargo space, or at least to one side of it.

In the embodiment shown, there is an operating device 15 between the first part 12 and the cargo space, for operating the vertical structure 10. Operation is then easy and rapid. In addition, the operating device acts as a support arm, holding the first part securely in the horizontal plane. The operating device is preferably a hydraulic cylinder and an operating device is placed at both ends of the vertical structure. In the invention, in the transportation position the vertical structure 10 is supported from its end parts on a vertical support 17, which is attached to the cargo space 21. Thanks to the support of the main parts there is unobstructed movement on the access platform 11. A fixed ladder 21 facilitates climbing to the access platform 11.

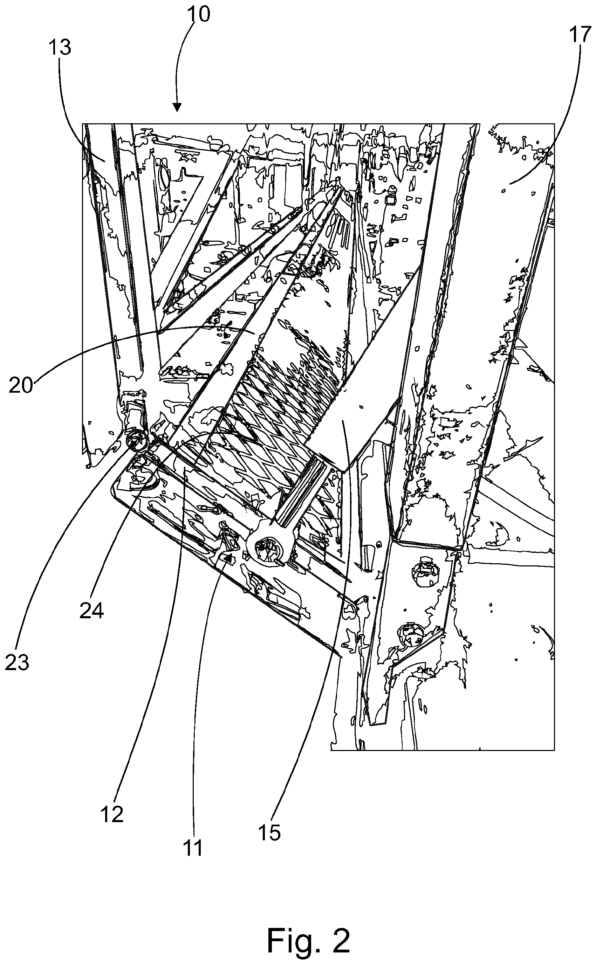

In the invention, the cargo space 21 includes vertical supports 17, on which the vertical structure 10 is supported from its end parts. An attachment 28 is arranged in the cargo space for the vertical support 17. The vertical support 17 is attached to the attachment 28 by shape-locking and the fitting is ensured with bolts (Figure 2). In other words, the vertical support is attached detachably. In addition, the operating device 15 is attached to the vertical support 17. Thus, if necessary, the entire side structure, together with its vertical supports and operating devices, can be detached for maintenance or repair. In addition, the side structure can be prefabricated and even tested before installation.

According to Figure 1b, between the first part 12 and the second part 13 there is a support structure 16 to hold the second part 13 vertical when the first part 12 is horizontal and arranged as an access platform 11. The support structure 16 drops from a vertical position in the upper part of the stable guard fence 14 and locks, when the guard fence 14 can be leant upon when the access platform 11 can be walked upon.

According to Figures 1a and 2, the second part 13 is a metal framework 18, to which a tarpaulin covering 19 is fitted. The structure then remains light, but protective. In addition, the metal framework is sufficiently stiff to act as a guard fence. Figure 1a shows part of the tarpaulin covering 19.

The first part 12 is a metal frame 20, in which there is a grid 24 arranged as the access platform 11. The grid is light, but sturdy. In addition, possible loose rubbish on shoes falls through the grid to outside the cargo space. This avoids the rubbish reaching the cargo space, when the vertical structure is again turned to the transportation position.

In the embodiment shown, the vertical structure's height is 1500 mm, of which the access platform's share is 400 mm. The guard fence's height is then 1100 mm. Generally, the height of the said first part 12 is 20 - 40% of the height of the vertical structure 10. The access platform is then sufficiently wide for movement and the guard fence sufficiently high to ensure safety.

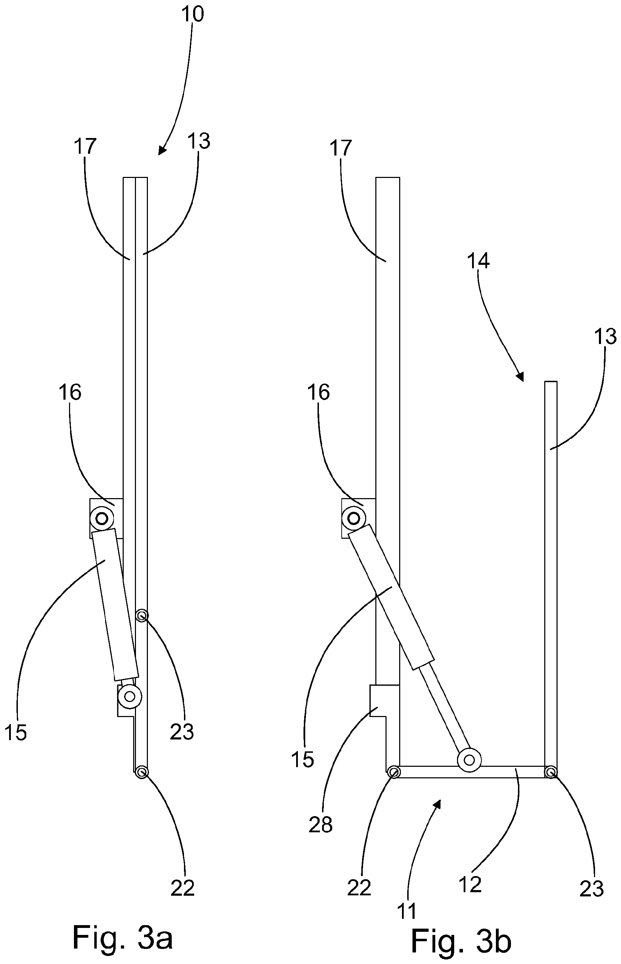

Figures 3a and 3b show the vertical structure according to the invention in two operating positions. In addition, here the view is from the access platform 11 towards the vertical support 17. In other words the view is a partial cross-section without section lines. In the invention, the vertical structure 10 is fitted between the vertical supports 17 both longitudinally and laterally. The longitudinal fitting between is shown in Figure 1a, in which the vertical structure 10 is fitted between two vertical supports 17. Correspondingly, Figure 3a shows the lateral fitting between, in which the vertical structure 10, raised into the transportation position is behind the vertical support 17. The vertical structure then lies on the plane of the vertical supports, without protrusions that would increase air resistance. At the same time, the vertical structure is secured by the vertical supports and is protected from the slipstream. For reasons of clarity the support structure is not shown here.

Using the vertical structure according to the invention the cargo is protected and at the same time a sturdy access platform is formed essentially over the entire length of the cargo space. In addition, the access platform has a guard fence preventing falling. Particular advantages are achieved with the vertical structure in an inloader trailer 25, in which there is a high but narrow frame 26. In addition, there are often devices 27 supporting the load, which prevent, or at least hinder movement on top of the frame 26. In the invention, the cargo space 21 is indeed an unroofed inloader trailer 25.

## Claims

1. Side structure of a cargo space, which includes a vertical structure (10) attached to the cargo space (21) to protect the cargo, which vertical structure (10) is fitted pivotably to the cargo space (21) in order to form an access platform (11), **characterized in that** the vertical structure (10) includes two parts (12, 13) on top of each other, of which the first part (12) is pivoted to the cargo space (21) and the second part (13) is pivoted to the first part (12).

2. Side structure according to Claim 1, **characterized in that** the cargo space (21) includes vertical supports (17), on which the vertical structure (10) is supported from its end parts.

3. Side structure according to Claim 2, **characterized in that** the cargo space (21) includes an attachment (28), to which the vertical support (17) is detachably attached.

4. Side structure according to Claim 2 or 3, **characterized in that** the vertical structure (10) is fitted between the vertical supports (17) both longitudinally and laterally.

5. Side structure according to any of Claims 1 - 4, **characterized in that** the first part (12) is arranged to form an access platform (11), the second part (13) being a guard fence (14).

6. Side structure according to any of Claim 1 - 5, characterized between the first part (12) and the cargo space (21) is an operating device (15) for operating the vertical structure (10).

7. Side structure according to Claim 6, **characterized in that** the operating device (15) is attached to a vertical support (17).

8. Side structure according to any of Claims 1 - 7, **characterized in that** between the first part (12) and the second part (13) is a support structure (16) for holding the second part (13) vertical as a guard fence (14) while the first part (12) is horizontal and arranged as an access platform (11).

9. Side structure according to any of Claims 1 - 8, **characterized in that** the second part (13) is a metal framework (18), on which there is a tarpaulin covering (19).

10. Side structure according to any of Claims 1 - 9, **characterized in that** the first part (12) is a metal framework (20), in which there is a grid (24) arranged to form an access platform (11).

11. Side structure according to any of Claims 1 - 10, **characterized in that** the height of the first part (12) is 20 - 40% of the height of the vertical structure (10).

12. Side structure according to any of Claims 1 - 11, **characterized in that** the cargo space (21) is an unroofed inloader trailer (25).

13. Side structure according to Claim 12, **characterized in that** the inloader trailer (25) includes a frame (26), on top of which are devices (27) for supporting the load, outside of which the access platform (11) is arranged.

14. Side structure according to any of Claims 1 - 13, **characterized in that** a vertical structure (10) is arranged on both sides of the cargo space (21).

## Patentansprüche

1. Seitenkonstruktion eines Laderaums, die eine vertikale Konstruktion (10) umfasst, die am Laderaum (21) zum Schutz der Ladung angebracht ist, wobei die vertikale Konstruktion (10) schwenkbar am Laderaum (21) gelagert ist, um eine Zugangsplattform (11) zu bilden, **dadurch gekennzeichnet, dass** die vertikale Konstruktion (10) aus zwei übereinander befindlichen Teilen (12, 13) besteht, von denen das erste Teil (12) schwenkbar am Laderaum (21) und das zweite Teil (13) schwenkbar am ersten Teil (12) gelagert ist.

2. Seitenkonstruktion nach Anspruch 1, **dadurch gekennzeichnet, dass** der Laderaum (21) vertikale Stützen (17) umfasst, auf denen die Enden der vertikalen Konstruktion (10) aufliegen.

3. Seitenkonstruktion nach Anspruch 2, **dadurch gekennzeichnet, dass** der Laderaum (21) eine Halterung (28) umfasst, an der die vertikale Stütze (17) abnehmbar befestigt ist.

4. Seitenkonstruktion nach Anspruch 2 oder 3, **dadurch gekennzeichnet, dass** die vertikale Konstruktion (10) sowohl längs als auch seitlich zwischen den vertikalen Stützen (17) eingepasst ist.

5. Seitenkonstruktion nach einem der Ansprüche 1 bis 4, **dadurch gekennzeichnet, dass** das erste Teil (12) so ausgelegt ist, dass es eine Zugangsplattform (11) bildet, während das zweite Teil (13) als Schutzzaun (14) dient.

6. Seitenkonstruktion nach einem der Ansprüche 1 bis 5, **dadurch gekennzeichnet, dass** sich zwischen dem ersten Teil (12) und dem Laderaum (21) eine Bedienvorrichtung (15) zur Bedienung der vertikalen Konstruktion (10) befindet.

7. Seitenkonstruktion nach Anspruch 6, **dadurch gekennzeichnet, dass** die Bedienvorrichtung (15) an einer vertikalen Stütze (17) befestigt ist.

8. Seitenkonstruktion nach einem der Ansprüche 1 bis 7, **dadurch gekennzeichnet, dass** sich zwischen dem ersten Teil (12) und dem zweiten Teil (13) eine Stützkonstruktion (16) befindet, die den zweiten Teil (13) in vertikaler Stellung als Schutzzaun (14) hält, während sich das erste Teil (12) in horizontaler Lage befindet und als Zugangsplattform ausgelegt ist (11).

9. Seitenkonstruktion nach einem der Ansprüche 1 bis 8, **dadurch gekennzeichnet, dass** das zweite Teil (13) ein Metallrahmen (18) ist, der mit einer Plane (19) abgedeckt ist.

10. Seitenkonstruktion nach einem der Ansprüche 1 bis 9, **dadurch gekennzeichnet, dass** das erste Teil (12) ein Metallrahmen (20) ist, in dem ein Gitter (24) angebracht ist, um eine Zugangsplattform (11) zu bilden.

11. Seitenkonstruktion nach einem der Ansprüche 1 bis 10, **dadurch gekennzeichnet, dass** die Höhe des ersten Teils (12) 20-40 % der Höhe der vertikalen Konstruktion (10) beträgt.

12. Seitenkonstruktion nach einem der Ansprüche 1 bis 11, **dadurch gekennzeichnet, dass** der Laderaum (21) ein nicht abgedeckter Innenlader (25) ist.

13. Seitenkonstruktion nach Anspruch 12, **dadurch gekennzeichnet, dass** der Innenlader (25) einen Rahmen (26) umfasst, auf dem sich Vorrichtungen (27) zum Stützen der Ladung befinden, außerhalb derer die Zugangsplattform (11) angeordnet ist.

14. Seitenkonstruktion nach einem der Ansprüche 1 bis 13, **dadurch gekennzeichnet, dass** eine vertikale Konstruktion (10) zu beiden Seiten des Laderaums (21) angeordnet ist.

## Revendications

1. Structure latérale d'un espace de chargement, comprenant une structure verticale (10) fixée à l'espace de chargement (21) pour protéger le chargement, laquelle structure verticale (10) est montée de manière pivotante sur l'espace de chargement (21) afin de former une plate-forme d'accès (11), **caractérisée en ce que** la structure verticale (10) comprend deux parties (12, 13) l'une sur l'autre, dont la première partie (12) est pivotée vers l'espace de chargement (21) et la seconde partie (13) est pivotée vers la première partie (12).

2. Structure latérale conformément à la revendication 1, **caractérisée en ce que** l'espace de chargement (21) comprend des supports verticaux (17), sur lesquels la structure verticale (10) est soutenue par ses extrémités.

3. Structure latérale conformément à la revendication 2, **caractérisée en ce que** l'espace de chargement (21) comprend une fixation (28), à laquelle le support vertical (17) est fixé de manière amovible.

4. Structure latérale conformément à la revendication 2 ou 3, **caractérisée en ce que** la structure verticale (10) est montée entre les supports verticaux (17), longitudinalement et latéralement.

5. Structure latérale conformément à l'une quelconque des revendications 1 à 4, **caractérisée en ce que** la première partie (12) est disposée de manière à former une plate-forme d'accès (11), la deuxième partie (13) étant une barrière de protection (14).

6. Structure latérale conformément à l'une quelconque des revendications 1 à 5, **caractérisée en ce qu'**entre la première partie (12) et l'espace de chargement (21) se trouve un dispositif de commande (15) pour faire fonctionner la structure verticale (10).

7. Structure latérale conformément à la revendication 6, **caractérisée en ce que** le dispositif de commande (15) est fixé à un support vertical (17).

8. Structure latérale conformément à l'une quelconque des revendications 1 à 7, **caractérisée en ce qu'**entre la première partie (12) et la seconde partie (13) se trouve une structure de support (16) destinée à maintenir la deuxième partie (13) verticale en tant que barrière de protection (14), tandis que la première partie (12) est horizontale et disposée comme une plate-forme d'accès (11).

9. Structure latérale conformément à l'une quelconque des revendications 1 à 8, **caractérisée en ce que** la seconde partie (13) est une armature métallique (18), sur laquelle se trouve une bâche de recouvrement (19).

10. Structure latérale conformément à l'une quelconque des revendications 1 à 9, **caractérisée en ce que** la première partie (12) est une armature métallique (20), dans laquelle se trouve une grille (24) disposée de manière à servir de plate-forme d'accès (11).

11. Structure latérale conformément à l'une quelconque des revendications 1 à 10, **caractérisée en ce que** la hauteur de la première partie (12) représente 20 à 40 % de la hauteur de la structure verticale (10).

12. Structure latérale conformément à l'une quelconque des revendications 1 à 11, **caractérisée en ce que** l'espace de chargement (21) est une remorque de chargement sans toit (25) .

13. Structure latérale conformément à la revendication 12, **caractérisée en ce que** la remorque de chargement (25) comprend un cadre (26) sur lequel se trouvent des dispositifs (27) supportant la charge, à l'extérieur desquels est disposée la plate-forme d'accès (11).

14. Structure latérale conformément à l'une quelconque des revendications 1 à 13, **caractérisée en ce que** la structure verticale (10) est disposée de chaque côté de l'espace de chargement (21).
